# EUROPÄISCHE PATENTSCHRIFT

(11) **EP 2 703 214 B1**
(45) Veröffentlichungstag und Bekanntmachung des Hinweises auf die Patenterteilung: **07.11.2018**
(21) Anmeldenummer: 12181908.0
(22) Anmeldetag: 27.08.2012
(51) Int. Cl.: B60P 3/20

(54) **Trennwand für ein Nutzfahrzeug und Nutzfahrzeug mit einer Trennwand**
Partition wall for a commercial vehicle and commercial vehicle with such a partition wall
Paroi de séparation pour un véhicule utilitaire et véhicule utilitaire équipé de cette paroi de séparation

(43) Veröffentlichungstag der Anmeldung: 05.03.2014
(73) Patentinhaber: Schmitz Cargobull AG, 48341 Altenberge (DE)
(72) Erfinder: Banker, Werner, 48720 Rosendahl (DE); Beelmann, Reinhard, 45721 Haltern am See (DE)
(74) Vertreter: Cohausz & Florack

(56) Entgegenhaltungen:
- EP-A1- 1 726 478
- DE-A1- 19 808 841
- FR-A3- 2 635 737
- US-A- 2 725 827

## Beschreibung

Die Erfindung betrifft eine Trennwand zur Unterteilung eines Laderaums eines Nutzfahrzeugaufbaus, vorzugsweise eines Lastkraftwagens, Anhängers und/oder Sattelaufliegers, mit jeweils wenigstens einer Dichtleiste an der unteren Schmalseite und den seitlichen Schmalseiten der Trennwand zur Abdichtung von Spalten zwischen der Trennwand und dem Nutzfahrzeugaufbau, wobei die Dichtleisten von einer eingefahrenen in eine ausgefahrene Stellung verstellbar sind. Ferner betrifft die Erfindung einen Nutzfahrzeugaufbau mit einer solchen Trennwand.

Bei den Nutzfahrzeugaufbauten, die durch Trennwände unterteilt werden, handelt es sich meist um sogenannte Kofferaufbauten, die regelmäßig feste Wände und ein festes Dach aufweisen und durch Sandwich-Paneele gebildet werden. Die Paneele weisen dabei äußere Decklagen und eine innere Kernlage auf. Besondere Bedeutung für die Unterteilung des Laderaums kommt dabei sogenannten Kühlkofferaufbauten zu, deren Laderaum gekühlt werden kann. Zum Zwecke der Isolation werden die Kernlagen solcher Paneele durch einen isolierenden, geschäumten Kunststoff gebildet.

In den beiden Segmenten des durch die Trennwand unterteilten Laderaums eines Kühlkofferaufbaus können unterschiedliche Temperaturniveaus bereitgestellt werden, um darin Güter bei unterschiedlichen Temperaturen zu transportieren.

Insbesondere bei Lebensmitteln soll auf diese Weise ein Qualitätsverlust vermieden werden. Unabhängig davon kann durch die Trennwand ein ungekühlter von einem gekühlten Bereich des Laderaums getrennt werden, wenn nur einige der zu transportierenden Güter gekühlt werden müssen. Auf diese Weise lassen sich die für die Kühlung des Laderaums anfallenden Kosten senken.

Damit die Trennwände flexibel positioniert werden können, lassen sich diese im Laderaum verfahren. Dies wird beispielsweise durch eine Aufhängung der Trennwand an einem Schlitten erreicht, der in Laufschienen im Dach geführt sein kann. Zudem sind die bekannten Trennwände schwenkbar ausgebildet, so dass die Trennwände in eine horizontale Nichtgebrauchsstellung, etwa nahe dem Dach, verschwenkt werden können.

Damit die beiden durch die Trennwand abgetrennten Segmente des Nutzfahrzeugaufbaus auch thermisch voneinander getrennt werden können, kann auch die Trennwand in Form eines Sandwich-Paneels mit zwei äußeren Decklagen und einer isolierenden Kernlage ausgebildet sein. Auch bei dieser Kernlage kann es sich um einen geschäumten Kunststoff handeln. Unabhängig davon sollte jedoch ein direkter Luftaustausch zwischen den durch die Trennwand abgetrennten Segmenten unterbunden werden. Zu diesem Zweck sind die bekannten Trennwände an den Schmalseiten mit Dichtleisten versehen, die sich an die Seitenwände, den Boden und/oder das Dach des Nutzfahrzeugaufbaus anlegen können.

Beim Öffnen der Trennwand durch Verschwenken aus der vertikalen Gebrauchsstellung in die horizontale Nichtgebrauchsstellung soll jedoch ein Luftaustausch zwischen den vormals getrennten Segmenten des Laderaums möglich sein. Durch das Verschwenken und durch Abkühlung des von der Schwenkrichtung der Trennwand abgewandten Segments des Laderaums kann sich ansonsten hinter der Trennwand, also insbesondere zwischen der Trennwand und der Stirnwand des Nutzfahrzeugaufbaus, ein Unterdruck bilden, der das Aufschwenken der Trennwand erschweren oder gar verhindern kann.

Da die dem Dach und dem Boden zugeordneten Dichtleisten der Trennwand bereits bei einem geringen Verschwenken der Trennwand den Kontakt zum Dach und zum Boden verlieren und durch den so entstehenden Spalt Luft hindurch treten lassen, die seitlichen Dichtleisten aber ohne eine Verstellung auch beim Aufschwenken an den Seitenwänden anliegen, hat es sich bewährt, die seitlichen Dichtleisten beweglich vorzusehen. Die seitlichen Dichtleisten können so vor dem Verschwenken der Trennwand von den Seitenwänden des Nutzfahrzeugaufbaus getrennt werden, so dass seitlich schmale Spalten entstehen. Dies hat neben dem Luftaustausch zwischen den Segmenten des Laderaums beim Aufschwenken der Trennwand den zusätzlichen Vorteil, dass ein Verkratzen oder eine anderweitige Beschädigung der Seitenwände des Nutzfahrzeugaufbaus durch die seitlichen Dichtleisten vermieden wird. Insbesondere sind die seitlichen Dichtleisten der bekannten Trennwände zur Seite ausfahrbar und wieder einfahrbar. Derartige Trennwände sind beispielsweise in der gattungsgemäßen GB 2 226 993 A und der DE 198 08 841 A1 beschrieben.

Das Verschwenken der Trennwände der eingangs genannten Art erfordert jedoch trotz der verstellbaren seitlichen Dichtelemente oftmals einen hohen Kraftaufwand.

Daher liegt der vorliegenden Erfindung die Aufgabe zugrunde, die eingangs genannte und zuvor näher beschriebene Trennwand und den eingangs genannten und zuvor näher beschriebenen Nutzfahrzeugaufbau derart auszugestalten und weiterzubilden, dass die Handhabung der Trennwand vereinfacht werden kann, ohne die Trennwand hierzu wesentlich aufwendiger gestalten zu müssen.

Diese Aufgabe ist bei einer Trennwand nach dem Oberbegriff des Anspruchs 1 dadurch gelöst, dass eine mit den Dichtleisten derart verbundene Bedieneinheit vorgesehen ist, so dass die Dichtleisten durch Betätigung der Bedieneinheit von der eingefahrenen in die ausgefahrene Stellung und zurück verstellbar sind.

Erfindungsgemäß ist also vorgesehen, dass nicht nur die seitlichen Dichtleisten, sondern auch eine untere Dichtleiste der Trennwand von der eingefahrenen bzw. zurückgezogenen in die ausgefahrene bzw. vorgezogene Stellung und zurück verstellbar ist. Auf diese Weise kann bereits vor dem Aufschwenken der Trennwand auch am Boden ein Spalt zum Durchströmen von Luft von einem Segment des von der Trennwand unterteilten Laderaums in das andere Segment desselben bereitgestellt werden. Obwohl sich die bodennahe Dichtleiste ohnehin mit beginnendem Verschwenken der Trennwand aus ihrer vertikalen Position vom Boden des Nutzfahrzeugaufbaus abhebt, hat sich nämlich überraschend gezeigt, dass das Aufschwenken einer Trennwand durch ein vorheriges Zurückziehen oder Einfahren der unteren Dichtleiste merklich vereinfacht wird. Dabei hat die Erfindung entgegen den bestehenden Erwartungen festgestellt, dass das Einfahren der bodennahen Dichtleiste einen größeren Effekt hat, als ein stärkeres Einfahren der seitlichen Dichtleisten zur Vergrößerung der seitlichen Spalte.

Der mit der erfindungsgemäßen Trennwand erzielbare Effekt ist zudem wider Erwarten so groß, dass sich die hierfür erforderliche, aufwendigere Ausgestaltung der Trennwand rechnet. Dabei hat die Erfindung zudem erkannt, dass der zusätzliche konstruktive Aufwand gleichzeitig dafür genutzt werden kann, die Handhabung der Trennwand weiter zu reduzieren. Erfindungsgemäß ist nämlich vorgesehen, dass die seitlichen Dichtleisten und die untere Dichtleiste über eine einzige Bedieneinheit von der eingefahrenen in die ausgefahrene Stellung und zurück verstellt werden können. Zusätzliche Handgriffe zum Verstellen der unteren Dichtleiste sind also nicht erforderlich. Dabei wird der ergänzende Vorteil genutzt, dass die Fahrer des Nutzfahrzeugs die erfindungsgemäße Trennwand in der gewohnten Weise benutzen kann. Es kann also nicht zu einer versehentlichen Fehlbedienung der Trennwand kommen.

Die zuvor genannte Aufgabe wird auch durch einen Nutzfahrzeugaufbau nach dem Oberbegriff des Anspruchs 13 gelöst, und zwar dadurch, dass eine mit den Dichtleisten derart verbundene Bedieneinheit vorgesehen ist, so dass die Dichtleisten durch Betätigung der Bedieneinheit von der eingefahrenen in die ausgefahrene Stellung und zurück verstellbar sind, und dass die Dichtleisten in der ausgefahrenen Stellung an den Seitenwänden und dem Boden anliegen.

Durch einen derartigen Nutzfahrzeugaufbau werden im Wesentlichen die gleichen Vorteile erzielt, die zuvor bereits im Zusammenhang mit der Trennwand beschrieben worden sind.

Erfindungsgemäß kommen als Nutzfahrzeug grundsätzlich alle Nutzfahrzeuge zum Transport von Gütern über längere Strecken im Straßenverkehr in Frage. Insbesondere handelt es sich dabei um Lastkraftwagen oder von Kraftwagen gezogene Nutzfahrzeuge, wie beispielsweise um Anhänger oder Sattelauflieger. Zudem handelt es sich bei den Nutzfahrzeugaufbauten vorzugsweise um sogenannte Kofferaufbauten, insbesondere um Kühlkofferaufbauten. Es kommen aber grundsätzlich auch andere Nutzfahrzeugaufbauten in Betracht, die einen zweckmäßig durch eine Trennwand unterteilbaren Laderaum aufweisen.

Daher müssen die Stirnwand, die Rückwand, die Seitenwände, und das Dach auch nicht vollkommen starr sein. Vorzugsweise handelt es sich bei der Stirnwand, der Rückwand, den Seitenwänden und/oder dem Dach jedoch um starre Paneele umfassend äußere Decklagen und eine dazwischen vorgesehene Kernlage. Insbesondere bei Nutzfahrzeugen zum Transport gekühlter Güter kann die Kernlage aus einem geschäumten Kunststoff bestehen. Die äußeren Decklagen können dabei wenigstens teilweise aus einer das Paneel stabilisierenden, bedarfsweise faserverstärkten, Kunststoffschicht oder einer metallischen Schicht aus beispielsweise Stahl oder Aluminium bestehen. Der Boden kann einen Sandwichaufbau aufweisen und/oder als Paneel ausgebildet sein. Hierauf kann jedoch auch verzichtet werden.

Die Trennwand weist vorzugsweise auch eine isolierende Schicht etwa in Form eines geschäumten Kunststoffs auf. Dabei kann es sich um die Kernschicht einer Trennwand in Form eines Paneels handeln, die, wie zuvor beschrieben, zwischen zwei äußeren Decklagen angeordnet sein kann. Zudem ist es besonders bevorzugt, wenn die Trennwand derart im Nutzfahrzeugaufbau montiert ist, dass die Trennwand im Nutzfahrzeugaufbau verfahren werden kann, um den Laderaum in verschiedene, vorzugsweise beliebige, Positionen unterteilen zu können. Dazu kann die Trennwand an wenigstens einem Schlitten aufgehängt sein, der entlang wenigstens einer Schiene im Dach des Nutzfahrzeugaufbaus verfahren werden kann. Bevorzugt sind regelmäßig zwei Schlitten in unterschiedlichen Schienen.

Alternativ oder zusätzlich ist es bevorzugt, wenn die Trennwand von einer im Wesentlichen vertikalen Gebrauchsstellung zur Unterteilung des Laderaums in unterschiedliche Segmente in eine im Wesentlichen horizontale Nichtgebrauchsstellung und zurück verschwenkt werden kann. Die Nichtgebrauchsstellung ist dabei zur Einsparung von Laderaum vorzugsweise nahe dem Dach angeordnet. Zum Verschwenken der Trennwand von der Nichtgebrauchsstellung in die Gebrauchsstellung und zurück, kann wenigstens eine, bedarfsweise federbelastete, Schwenkverbindung vorgesehen sein. Die wenigstens eine Schwenkverbindung kann zudem zwischen der Trennwand und dem wenigstens einen Schlitten vorgesehen sein. So lässt sich die Trennwand bedarfsweise in einer geneigten Stellung, der vertikalen Stellung und/oder der horizontalen Stellung verfahren. Insbesondere in der horizontalen Nichtgebrauchsstellung kann die Trennwand aber gegenüber einem versehentlichen Verfahren gesichert und beispielsweise am Dach festgelegt werden.

Bei den Schmalseiten der Trennwand handelt es sich um die Seiten der Trennwand, die in der Gebrauchsstellung der Trennwand in Richtung des Bodens, des Dachs und der Seitenwände oder der Stirnwand und der Rückwand zeigen, sofern die Trennwand längs und nicht quer zum Nutzfahrzeug angeordnet ist. Die beiden verbleibenden Seiten der Trennwand sind gegenüber den Schmalkanten großflächig und weisen in der Gebrauchsstellung in Richtung der durch die Trennwand abgetrennten Segmente des Laderaums des Nutzfahrzeugaufbaus.

Im Übrigen wird unter einer ausgefahrenen Stellung einer Dichtleiste eine solche verstanden, in der sich die Dichtleiste weiter außen befindet als in der zurückgezogenen bzw. eingefahrenen Stellung, und zwar vorzugsweise in einer Ebene parallel zur Trennwandebene. In der ausgefahrenen Stellung ist die Dichtleiste dann weiter nach außen in Richtung der angrenzenden Wand des Nutzfahrzeugaufbaus verstellt als in der eingezogenen oder eingefahrenen Stellung.

Bei einer ersten bevorzugten Ausgestaltung der Trennwand ist wenigstens eine der Dichtleisten an der unteren Schmalkante und/oder an den seitlichen Schmalkanten über einen Kniehebelmechanismus von der eingefahrenen in die ausgefahrene Position und zurück verstellbar vorgesehen. Ein entsprechender Kniehebelmechanismus ist einfach und zuverlässig und gewährleistet eine gute Kraftübertragung und somit letztlich eine gute Dichtung. Weiter bevorzugt ist es jedoch, wenn die Dichtleisten jeweils über einen Kniehebelmechanismus von der eingefahrenen in die ausgefahrene Position und zurück verstellbar sind. Ein Kniehebelmechanismus weist dabei wenigstens einen Kniehebel auf, wobei es aufgrund der Länge der entsprechenden Schmalseite der Trennwand zweckmäßig sein kann, eine Mehrzahl von Kniehebeln vorzusehen, etwa um den Anpressdruck der Dichtleiste an die angrenzende Wand des Nutzfahrzeugs zu vergleichmäßigen.

Einfach und wirkungsvoll kann der wenigstens eine Kniehebelmechanismus ausgebildet werden, wenn ein Ende des wenigstens einen Kniehebels ortsfest an der Trennwand gehalten ist. Dann kann sich das andere Ende des Kniehebels gegenüber dem ortsfesten Ende abstützen und nach außen drücken.

Der wenigstens eine Kniehebel ist bevorzugt in einfacher und zugleich zuverlässiger Weise über wenigstens einen Stellhebel mit der Bedieneinheit verbunden. Dies kann des einfacheren Aufbaus halber für jeden der seitlichen und der unteren Kniehebel zutreffen. Weiter bevorzugt ist es der gleichmäßigen Kraftübertragung wegen, wenn sich der Stellhebel im Wesentlichen parallel zur Dichtleiste erstreckt. Dabei kann auch eine gewisse Abweichung von der genannten Parallelität geduldet werden. Der Stellhebel muss auch nicht zwingend geradlinig ausgebildet sein. Es genügt grundsätzlich, wenn der Stellhebel zum Antrieb des wenigstens einen Kniehebels geeignet ist. Es kann zwar eine unmittelbare Verbindung zwischen der Bedieneinheit und dem wenigstens einen Stellhebel vorgesehen sein. Erforderlich ist dies jedoch weniger.

Alternativ oder zusätzlich kann der einfachen Bedienbarkeit halber der wenigstens eine Kniehebel wenigstens einer Dichtleiste über ein Koppelgestänge mit der Bedieneinheit verbunden sein. Das Koppelgestänge kann dabei einen schwenkbar an der Trennwand gehaltenen Schwenkhebel zur Kraftübertragung von der Bedieneinheit auf den Kniehebel umfassen. So wird eine gute Kraftübertragung und eine hohe Zuverlässigkeit der Trennwand erreicht. Bei einer konstruktiv besonders bevorzugten Ausgestaltung der Trennwand ist der wenigstens eine Kniehebel über wenigstens einen Stellhebel mit der Bedieneinheit verbunden.

Zum einfachen Verstellen der unteren Dichtleiste kann ein Stellhebel der unteren Dichtleiste mit einem Stellhebel einer seitlichen Dichtleiste verbunden sein. Der Stellhebel der unteren Dichtleiste wird dann durch den Stellhebel der seitlichen Dichtleiste angetrieben. Es kann zur Vergleichmäßigung der Kraftübertragung auch vorgesehen sein, dass der unteren Dichtleiste zwei oder mehr Stellhebel zugeordnet sind, die teilweise mit dem Stellhebel der einen seitlichen Dichtleiste und teilweise mit dem Stellhebel der anderen seitlichen Dichtleiste verbunden sind. Die Verbindung zwischen einem Stellhebel einer seitlichen Dichtleiste und dem wenigstens einen Stellhebel der unteren Dichtleiste erfolgt dabei bedarfsweise über einen schwenkbar an der Trennwand gehaltenen Schwenkhebel. Dies ist konstruktiv einfach und erlaubt zugleich eine zuverlässige Betätigung der Trennwand.

Zur sicheren Arretierung der Trennwand und gegebenenfalls um die Trennwand als Mittel der Ladungssicherung nutzen zu können, kann die untere Dichtleiste wenigstens ein Arretierelement zur Arretierung der Trennwand am Boden des Nutzfahrzeugaufbaus und wenigstens ein Dichtelement zur Abdichtung eines Spalts zwischen der Trennwand und dem Boden des Nutzfahrzeugaufbaus aufweisen. Um mit dem Boden zusammenwirken zu können, bildet das Arretierelement in der ausgefahrenen Stellung der unteren Dichtleiste einen Teil der Unterseite der Dichtleiste. Das Arretierelement weist also in Richtung des Bodens. Das Arretierelement hat eine andere Funktion als das Dichtelement, was sich darin zeigt, dass das Dichtelement eine hohe Elastizität aufweist, um sich leicht und zugleich flexibl verformen zu können, so dass das Dichtelement leicht der Kontur der angrenzenden Wand des Nutzfahrzeugaufbaus folgen kann. Demgegenüber weist das Arretierelement eine geringe Elastizität auf, um große Kräfte, beispielsweise Klemmkräfte, auf den Boden des Nutzfahrzeugaufbaus übertragen zu können.

Um die unterschiedliche Elastizität und die unterschiedliche Funktion von Arretierelement und Dichtelement auszugleichen und so für eine gute Dichtwirkung der unteren Dichtleiste zu sorgen, ist es bevorzugt, wenn das wenigstens eine Dichtelement in der eingefahrenen Stellung der unteren Dichtleiste gegenüber dem wenigstens einen Arretierelement nach unten vorsteht. Beim Ausfahren der unteren Dichtleiste kann dann zunächst das Dichtelement durch den Kontakt mit dem Boden deformiert werden und den dort befindlichen Spalt abdichten, bevor das Arretierelement den Boden erreicht und die Trennwand dort arretiert. Daher kann es zweckmäßig sein, wenn das wenigstens eine Arretierelement von dem Dichtelement umgriffen wird, und zwar vorzugsweise auch auf den Seiten des Arretierelements, die den von der Trennwand abgetrennten Segmenten des Laderaums zugeordnete sind.

Eine besonders zuverlässige Arretierung der Trennwand, die dann bedarfsweise auch als Mittel zur Ladungssicherung eingesetzt werden kann, wird erhalten, wenn das wenigstens eine Arretierelement eine profilierte Unterseite zum formschlüssigen Eingreifen der profilierten Unterseite in ein korrespondierendes Profil des Bodens des Nutzfahrzeugaufbaus aufweist. Die Profile bilden somit einen Formschluss. Dies ist zweckmäßig, weil die Böden von Nutzfahrzeugaufbauten in vielen Fällen aus anderen Gründen ohnehin ein Profil aufweisen. Außerdem kann so ein Formschluss bei einem bis auf das Profil ebenen Boden des Nutzfahrzeugaufbaus erreicht werden. Um einen Formschluss zwischen den Seiten des wenigstens einen Arretierelements und dem Boden zu erreichen müssten dagegen Vorsprünge im Boden vorgesehen sein, gegen welche sich das Arretierelement abstützen könnte. Durch diese Vorsprünge könnte kein ebener Boden erzielt werden und wären auch die möglichen Positionen der Trennwand vorgegeben. Bei einer einfachen aber wirkungsvollen Ausgestaltung des wenigstens einen Arretierelements kann das Profil parallel zur Trennwandebene verlaufende Rillen aufweisen oder durch diese gebildet sein.

Um eine möglichst große Kraft über das wenigstens eine Arretierelement auf den Boden des Nutzfahrzeugaufbaus zu übertragen, kann das Arretierelement an einem Kniehebel gehalten oder an einem mit den Kniehebeln verbundenen Profilelement festgelegt sein.

Zum Zwecke einer möglichst platzsparenden und beim Betrieb des Nutzfahrzeugs wenig störenden Anordnung des zentralen Bedienhebels, kann dieser am oberen Rand der Trennwand angeordnet sein.

Hinsichtlich des Handlings ist es aus Gründen der besseren Kraftübertragung bevorzugt, wenn der zentrale Bedienhebel als Handhebel ausgebildet ist. Konstruktiv einfach ist es dabei, wenn der Handhebel im Wesentlichen parallel zur Trennwand schwenkbar ist. Um eine beidseitige Bedienbarkeit sicherstellen zu können, kann die Bedieneinheit von beiden Seiten der Trennwand bedienbar ausgebildet sein, beispielsweise dadurch, dass die Bedieneinheit auf beiden Seiten der Trennwand jeweils einen Handhebel aufweist.

Die Erfindung wird nachfolgend anhand von einer lediglich ein Ausführungsbeispiel darstellenden Zeichnung näher erläutert. In der Zeichnung zeigt
- Fig. 1: ein Nutzfahrzeug mit einem erfindungsgemäßen Nutzfahrzeugaufbau in perspektivischer Ansicht,
- Fig. 2: eine erfindungsgemäße Trennwand des Nutzfahrzeugaufbaus von Fig. 1 in einer Draufsicht,
- Fig. 3: ein Verstellmechanismus der Trennwand von Fig. 2,
- Fig. 4: das Detail IV aus Fig. 3,
- Fig. 5: das Detail V aus Fig. 3 ,
- Fig. 6: das Detail VI aus Fig. 3,
- Fig. 7: ein Detail der unteren Dichtleiste aus Fig. 2,
- Fig. 8: das Arretierelement aus Fig. 7 und
- Fig. 9: ein Detail der Oberseite des Bodens aus Fig. 1 in einer Schnittsansicht.

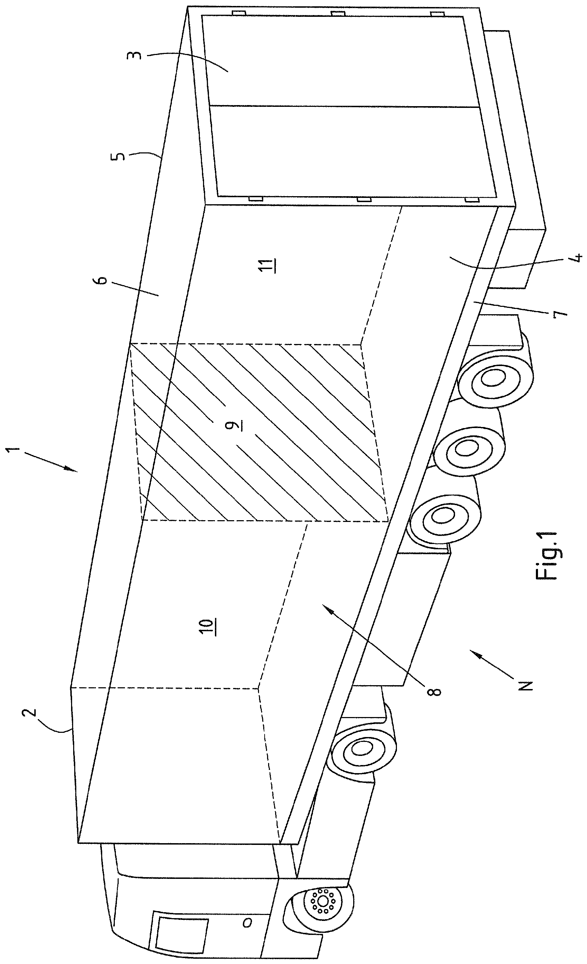

In der Fig. 1 ist ein Nutzfahrzeug N in Form eines Sattelaufliegers dargestellt, der einen Nutzfahrzeugaufbau 1 in Form eines Kühlkofferaufbaus trägt. Der Nutzfahrzeugaufbau 1 weist eine Stirnwand 2, eine Rückwand 3, zwei Seitenwände 4,5, ein Dach 6 und einen Boden 7 auf. Die Seitenwände 4,5, die Stirnwand 2 und das Dach 6 des dargestellten und insoweit bevorzugten Nutzfahrzeugaufbaus 1 werden durch Paneele gebildet, die zwei äußere Decklagen und eine dazwischen angeordnete Kernlage aus einem isolierenden, geschäumten Kunststoff aufweisen.

Der Nutzfahrzeugaufbau 1 schließt einen Laderaum des Nutzfahrzeugs ein, der zum Transport von Gütern im Straßenverkehr genutzt wird. Im Laderaum 8 des Nutzfahrzeugaufbaus 1 ist eine Trennwand 9 vorgesehen, die beim dargestellten und insoweit bevorzugten Nutzfahrzeugaufbau 1 dazu dient, den Laderaum 8 an verschiedenen, vorzugsweise beliebigen Stellen, quer zum Nutzfahrzeugaufbau 1 in ein vorderes Segment 10 und ein hinteres Segment 11 zu unterteilen. Dazu ist die Trennwand 9 über Schlitten 12 in am Dach 6 gehaltenen, vorzugsweise in das Dach 6 eingelassenen, Schienen verfahrbar gehalten. Die dargestellte und insoweit bevorzugte Trennwand 9 ist zudem gegenüber den Schlitten 12 verschwenkbar ausgebildet, um die Trennwand 9 von einer vertikalen Gebrauchsstellung in eine horizontale Nichtgebrauchsstellung verschwenken zu können.

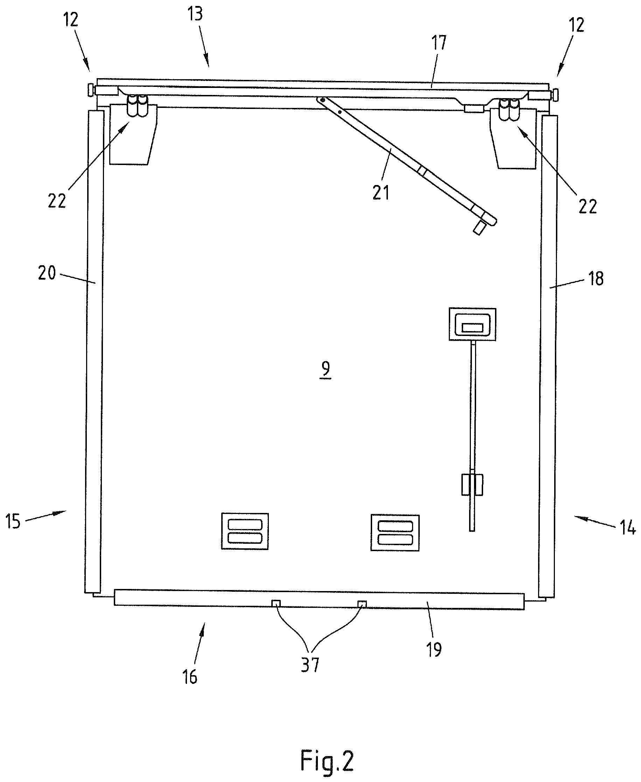

Darüber hinaus weist die Trennwand 9, die in der Fig. 2 näher dargestellt ist, an ihren Rändern, die auch als Schmalseiten 13,14,15,16 bezeichnet werden, Dichtleisten 17,18,19,20 auf. Die Dichtleisten 17,18,19,20 ermöglichen eine Abdichtung von Spalten zwischen der Trennwand 9 und der angrenzenden Wand 4,5,6,7 des Nutzfahrzeugaufbaus 1. Die seitlichen Dichtleisten 18,19 und die untere Dichtleiste 20 werden dazu über eine zentrale Bedieneinheit 21 von einer eingefahrenen Stellung in eine ausgefahrene Stellung verstellt, in der die Dichtleisten 18,19,20 an den Seitenwänden 4,5 bzw. an dem Boden 7 anliegen. Zum Verstellen der Trennwand 9 von der vertikalen Gebrauchsstellung in die horizontale Nichtgebrauchsstellung können die seitlichen Dichtleisten 18,19 durch Betätigen der zentralen Bedieneinheit 21 wieder in die eingefahrene Stellung gebracht werden. Die zentrale Bedieneinheit 21 ist beim dargestellten und insoweit bevorzugten Nutzfahrzeugaufbau 1 in Form zweier Handhebel ausgebildet, von denen ein Handhebel auf einer anderen Seite der Trennwand 9 vorgesehen ist. Anstelle eines Handhebels könnte aber grundsätzlich auch eine Kurbel, ein Handrad oder dergleichen vorgesehen sein. Ferner weist die dargestellte und bevorzugte Trennwand 9 Federmittel 22 in Form von Gasdruckfedern auf, die das Aufschenken der Trennwand 9 von der vertikalen Gebrauchsstellung in die horizontale Nichtgebrauchsstellung unterstützen.

Die Dichtleisten 18,19,20 der Trennwand 9 sind beim dargestellten Nutzfahrzeugaufbau 1 an sich entlang der jeweiligen Schmalseite erstreckenden Profilen gehalten. Die Dichtleisten 18,19,20 oder die Profile zur Aufnahme der Dichtleisten 18,19,20 sind jedoch so ausgebildet, dass zwischen diesen und den übrigen Teilen der Trennwand 9 jedenfalls bei ausgefahrenen Dichtleisten 18,19,20 kein Spalt zum Durchtritt von Luft von einer Seite der Trennwand 9 zur anderen Seite der Trennwand 9 vorhanden ist.

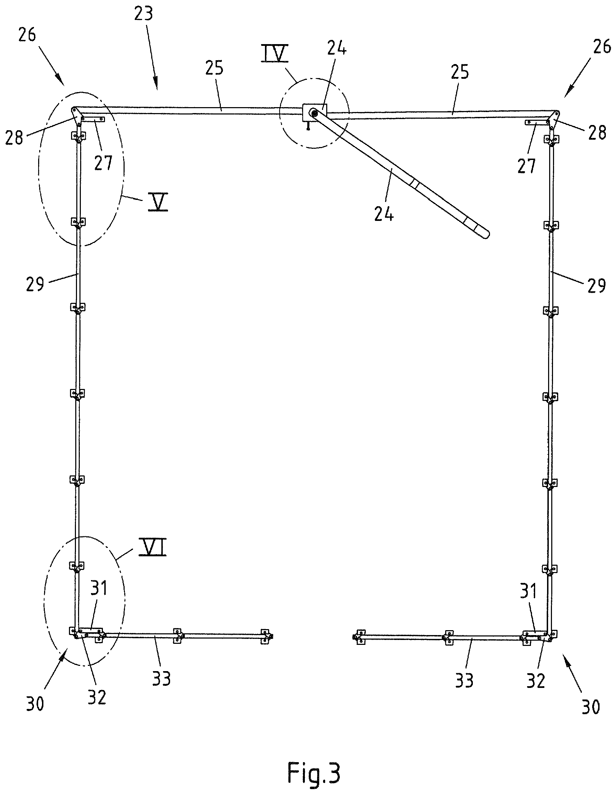

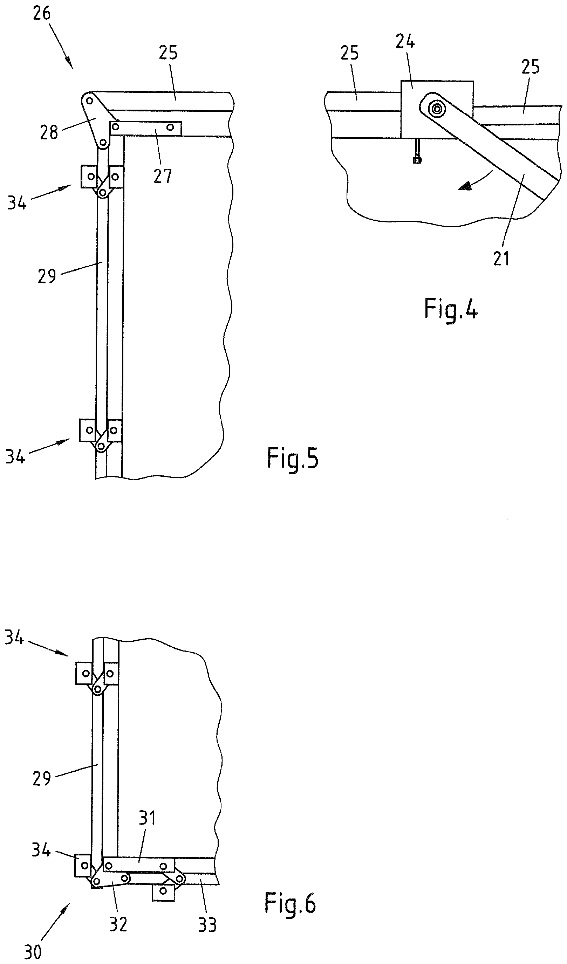

Der Mechanismus zum Verstellen der Dichtleisten 18,19,20 von der eingefahrenen in die ausgefahrene Stellung und zurück ist in den Fig. 3 bis 6 dargestellt, wobei der besseren Übersichtlichkeit halber die übrigen Bauteile der Trennwand 9 weggelassen wurden. Der Handhebel 21 ist mit einem in der Trennwand 9 vorgesehenen Koppelgestänge 23 verbunden und um eine Achse senkrecht zur Trennwandebene schwenkbar am oberen Rand der Trennwand 9 gehalten. Das Koppelgestänge 23 umfasst einen mit dem Handhebel 21 verbundenen Anschlussblock 24, der sich um die gleiche Achse wie der Handhebel 21 schwenken lässt und mit Lenkerstangen 25 verbunden ist. Die Lenkerstangen 25 verlaufen vom Anschlussblock 24 zu den gegenüberliegenden seitlichen Schmalseiten 14,15 der Trennwand 9, wo die Lenkerstangen 25 mit ihren äußeren Enden mit Schwenkbeschlägen 26 des Koppelgestänges 23 verbunden sind. Die Schwenkbeschläge 26 sind den oberen Ecken der Trennwand 9 zugeordnet und weisen jeweils eine Tragplatte 27 und einen an der Tragplatte 27 schwenkbar gehaltenen Schwenkhebel 28 auf, dessen einer Hebelarm mit einer Lenkerstange 23 und dessen anderer Hebelarm mit einem Stellhebel 29 verbunden ist. Der Stellhebel 29 erstreckt sich entlang der entsprechenden Schmalseite 14,15 und zwar im Wesentlichen parallel zu dieser.

Die unteren Enden der seitlichen Stellhebel 29 sind wiederum mit Schwenkbeschlägen 30 verbunden, die den unteren Ecken der Trennwand 9 zugeordnet sind und neben einer Tragplatte 31 einen Schwenkhebel 32 umfassen, der schwenkbar an der Tragplatte 31 gehalten ist. Beim dargestellten und insoweit bevorzugten Nutzfahrzeugaufbau 1 ist das untere Ende des seitlichen Stellhebels 29 über eine gemeinsame Verbindung mit einem Stellhebel 33 der unteren Dichtleiste 20 und einem Kniehebel 34 verbunden. Die beiden Stellhebel 33 der unteren Dichtleiste 20 sind untereinander nicht verbunden, sondern voneinander beabstandet. Die seitlichen und unteren Kniehebel 34 sind jeweils mit nur schematisch dargestellten Profilelementen 35 verbunden, die das Dichtelement 36 der Dichtleisten 18,19,20 und im Falle der unteren Dichtleiste 20 auch die Arretierelemente 37 tragen.

Beim Verschwenken des Handhebels 21 nach links wird der Anschlussblock 24 in die gleiche Richtung geschwenkt. Dabei zieht der Anschlussblock 24 an den Lenkerstangen 25, wodurch die äußeren Enden der Lenkerstangen 25 nach innen gezogen werden. Diese Bewegung der Lenkerstangen 25 wird auf die Schwenkhebel 28 in den oberen Ecken der Trennwand 9 übertragen, die korrespondierend verschwenkt werden und die seitlichen Stellhebel 29 infolgedessen nach oben ziehen. Da die mit den seitlichen Stellhebeln 29 verbundenen Kniehebel 34 mit ihren nach innen gerichteten Enden ortsfest an der Trennwand 9 festgelegt sind, werden die gegenüberliegenden, nach außen weisenden Enden der Kniehebel 34 durch das Hinaufziehen des Steuerhebels 29 nach außen ausgefahren. Die eigentliche Dichtleiste 18,19 ist auf eine nicht näher dargestellte Weise mit den Kniehebeln 34 verbunden, so dass ein Strecken der Kniehebel 34 zu einem Ausfahren der Dichtleiste 18,19 und somit zum Schließen eines angrenzenden Spalts mit dem Nutfahrzeugaufbau 1 führt.

Wenn die seitlichen Stellhebel 29 nach oben gefahren werden, betätigen diese auch die den unteren Ecken der Trennwand 9 zugeordneten Schwenkbeschläge 30. Dabei werden die Schwenkhebel 32 der Schwenkbeschläge 30 verschwenkt und ziehen die Stellhebel 33 der unteren Dichtleiste 20 nach außen, was analog zu den seitlich vorgesehenen Kniehebeln 34 zu einer Streckung der unteren Kniehebel 34 und somit zu einem Verfahren der Dichtleiste 20 nach unten führt.

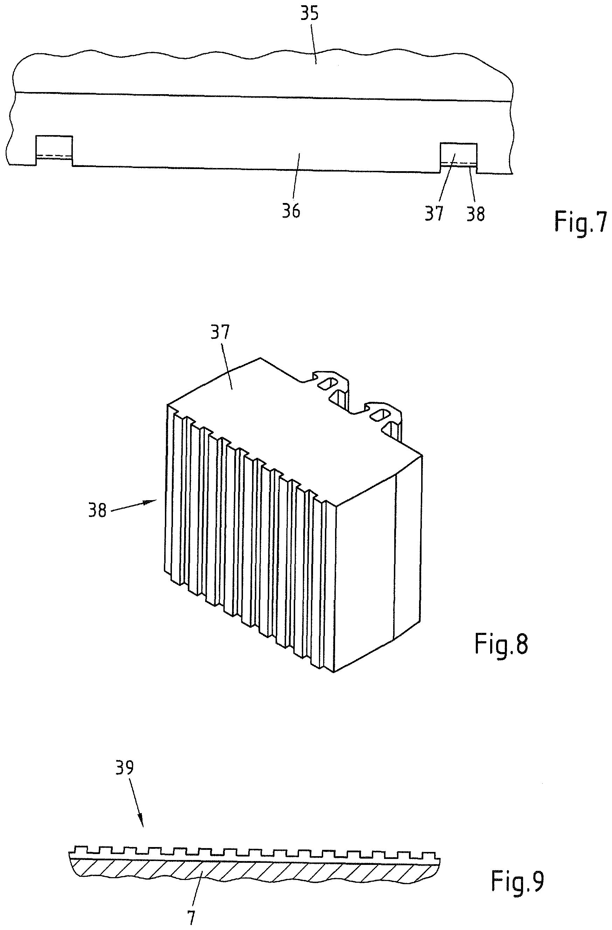

In der Fig. 7 ist ein Teil der unteren Dichtleiste 20 mit den in der Fig. 8 gesondert dargestellten Arretierelementen 37 dargestellt, die beim dargestellten Nutzfahrzeugaufbau 1 aus einem festen Kunststoff gefertigt ist, wobei jedoch auch andere Materialien in Frage kommen. Die Arretierelemente 37 sind zudem massiv ausgebildet und weisen eine deutlich niedrigere Elastizität auf als ein angrenzendes Dichtelement 36 der Dichtleiste 20. Das Arretierelement 37 stemmt sich also gegen den Boden 7 oder in den Boden 7 des Nutzfahrzeugaufbaus 1, während sich das leicht deformierbare Dichtelement 36 an den Boden anlegt. Damit die Arretierelemente 37 das Abdichten eines Spalts zwischen dem Boden 7 des Nutzfahrzeugaufbaus 1 und der Trennwand 9 nicht behindern, sind die Arretierelemente 37 gegenüber dem Dichtelement 36 zurückversetzt und im Dichtelement 36 aufgenommen angeordnet.

Das Arretierelement 37 weist beim dargestellten und insoweit bevorzugten Nutzfahrzeugaufbau 1 eine profilierte Unterseite 38 auf, die derart korrespondierend zu einer in der Fig. 9 beispielhaft dargestellten Profilierung 39 des Bodens 8 ausgebildet ist, dass das Profil des Arretierelements 37 in die Profilierung 19 der Oberseite des Bodens 7 eingreift, um auf diese Weise einen Formschluss zwischen der Trennwand 9 und dem Boden 7 bereitzustellen. Die Profilierungen 39 des Bodens 7 und des Arretierelements 37 können dabei jeweils das Negativ des jeweils anderen Profils darstellen. Zwingend ist dies aber nicht. Die Profile können sich auch nur soweit entsprechen, als dass dies zum Bereitstellen eines Formschlusses ausreichend ist.

Das Verstellen der Dichtleisten von der ausgefahrenen in die eingefahrene Stellung erfolgt analog zum Ausfahren der Dichtleisten nur in umgekehrter Weise.

## Patentansprüche

1. Trennwand (9) zur Unterteilung eines Laderaums (8) eines Nutzfahrzeugaufbaus (1), vorzugsweise eines Lastkraftwagens, Anhängers und/oder Sattelaufliegers, mit jeweils wenigstens einer Dichtleiste (18,19,20) an der unteren Schmalseite (16) und den seitlichen Schmalseiten (14,15) der Trennwand (9) zur Abdichtung von Spalten zwischen der Trennwand (9) und dem Nutzfahrzeugaufbau (1), wobei die Dichtleisten (18,19,20) von einer eingefahrenen in eine ausgefahrene Stellung verstellbar sind,
**dadurch gekennzeichnet, dass** eine mit den Dichtleisten (18,19,20) derart verbundene Bedieneinheit (21) vorgesehen ist, so dass die Dichtleisten (18,19,20) durch Betätigung der Bedieneinheit (21) von der eingefahrenen in die ausgefahrene Stellung und zurück verstellbar sind.

2. Trennwand nach Anspruch 1,
**dadurch gekennzeichnet, dass** die Dichtleisten (18,19,20) an der unteren Schmalseite (16) und an den seitlichen Schmalseiten (14,15), vorzugsweise jeweils, über einen Kniehebelmechanismus mit wenigstens einem Kniehebel (34) von der zurückgezogenen in die ausgefahrene Position und zurück verstellbar sind.

3. Trennwand nach Anspruch 2,
**dadurch gekennzeichnet, dass** ein Ende des wenigstens einen Kniehebels (34) ortsfest an der Trennwand (9) gehalten ist.

4. Trennwand nach Anspruch 2 oder 3,
**dadurch gekennzeichnet, dass** der wenigstens eine Kniehebel (34) wenigstens einer Dichtleiste (18,19,20) über wenigstens einen sich im Wesentlichen parallel zur Dichtleiste (18,19,20) erstreckenden Stellhebel (29,33) mit der Bedieneinheit (21) verbunden ist.

5. Trennwand nach einem der Ansprüche 2 bis 4,
**dadurch gekennzeichnet, dass** der wenigstens eine Kniehebel (34) wenigstens einer Dichtleiste (18,19,20) über ein Koppelgestänge (23) mit der Bedieneinheit (21) verbunden ist und dass das Koppelgestänge (23) einen schwenkbar an der Trennwand gehaltenen Schwenkhebel (28) zur Kraftübertragung von der Bedieneinheit (21), vorzugsweise über wenigstens einen Stellhebel (29), auf den Kniehebel (34) umfasst.

6. Trennwand nach Anspruch 4 oder 5,
**dadurch gekennzeichnet, dass** der wenigstens eine Stellhebel (33) der unteren Dichtleiste (20), vorzugsweise über einen schwenkbar an der Trennwand (9) gehaltenen Schwenkhebel (32), mit wenigstens einem Stellhebel (29) einer seitlichen Dichtleiste (18,19) verbunden ist.

7. Trennwand nach einem der Ansprüche 1 bis 6,
**dadurch gekennzeichnet, dass** die untere Dichtleiste (20) wenigstens ein Arretierelement (37) zur Arretierung der Trennwand (9) am Boden (7) des Nutzfahrzeugaufbaus (1) und wenigstens ein Dichtelement (36) zur Abdichtung eines Spalts zwischen der Trennwand (9) und dem Boden (7) des Nutzfahrzeugaufbaus (1) aufweist, dass das Arretierelement (37) in der ausgefahrenen Stellung der unteren Dichtleiste (20) einen Teil der Unterseite der Dichtleiste (20) bildet und dass das Arretierelement (37) gegenüber dem Dichtelement (36) eine verringerte Elastizität aufweist.

8. Trennwand nach Anspruch 7,
**dadurch gekennzeichnet, dass** das wenigstens eine Dichtelement (36) in der eingefahrenen Stellung der unteren Dichtleiste (20) gegenüber dem wenigstens einen Arretierelement (37) nach unten vorsteht.

9. Trennwand nach Anspruch 7 oder 8,
**dadurch gekennzeichnet, dass** das wenigstens eine Arretierelement (37) eine profilierte, vorzugsweise parallel zur Trennwandebene verlaufende Rillen aufweisende, Unterseite (38) zum formschlüssigen Eingreifen der profilierten Unterseite (38) in eine korrespondierende Profilierung (39) des Bodens (7) des Nutzfahrzeugaufbaus (1) aufweist.

10. Trennwand nach einem der Ansprüche 7 bis 9,
**dadurch gekennzeichnet, dass** das wenigstens eine Arretierelement (37) an einem Kniehebel (34) gehalten oder an einem von wenigstens einem Kniehebel (34) gehaltenen Profilelement (35) festgelegt ist.

11. Trennwand nach einem der Ansprüche 1 bis 10,
**dadurch gekennzeichnet, dass** die zentrale Bedieneinheit (21) am oberen Rand der Trennwand (9) angeordnet ist.

12. Trennwand nach einem der Ansprüche 1 bis 11,
**dadurch gekennzeichnet, dass** die zentrale Bedieneinheit (21) als ein, vorzugsweise im Wesentlichen parallel zur Trennwand (9) schwenkbarer, Handhebel ausgebildet ist.

13. Nutzfahrzeugaufbau (1), insbesondere eines Lastkraftwagens, Anhängers und/oder Sattelaufliegers, umfassend eine Stirnwand (2), eine Rückwand(3), zwei Seitenwände (4,5), ein Dach (6) und einen Boden (7), wobei der Nutzfahrzeugaufbau (1) einen Laderaum (8) einschließt, wobei eine zur Unterteilung des Laderaums (8) ausgebildete Trennwand (9) vorgesehen ist, wobei die Trennwand (9) jeweils eine Dichtleiste (18,19,20) an der unteren Schmalseite (16) und den seitlichen Schmalseiten (14,15) der Trennwand (9) zur Abdichtung von Spalten zwischen der Trennwand (9) einerseits und den Seitenwänden (4,5) sowie dem Boden (7) des Nutzfahrzeugaufbaus (1) andererseits aufweist, wobei die Dichtleisten (18,19,20) parallel zur Trennwandebene von einer zurückgezogenen in eine ausgefahrene Stellung verstellbar sind,
**dadurch gekennzeichnet, dass** eine mit den Dichtleisten (18,19,20) derart verbundene Bedieneinheit (21) vorgesehen ist, so dass die Dichtleisten (18,19,20) durch Betätigung der Bedieneinheit (21) von der eingefahrenen in die ausgefahrene Stellung und zurück verstellbar sind, und dass die Dichtleisten (18,19,20) in der ausgefahrenen Stellung an den Seitenwänden (4,5) und dem Boden (7) anliegen.

14. Nutzfahrzeugaufbau nach Anspruch 13,
**dadurch gekennzeichnet, dass** die Trennwand (9) nach einem der Ansprüche 2 bis 12 ausgebildet ist.

15. Nutzfahrzeugaufbau nach Anspruch 14,
**dadurch gekennzeichnet, dass** das wenigstens eine Arretierelement (37) eine profilierte, vorzugsweise parallel zur Trennwandebene verlaufende Rillen aufweisende, Unterseite (38) aufweist und dass das Profil der Unterseite des Arretierelements (37) in der ausgefahrenen Stellung der unteren Dichtleiste formschlüssig in eine korrespondierende Profilierung (39) des Bodens (7) des Nutzfahrzeugaufbaus (1) eingreift.

## Claims

1. Partition wall (9) for dividing a load compartment (8) of a commercial vehicle structure (1), preferably of a heavy goods vehicle, trailer and/or semitrailer, having respectively at least one sealing strip (18, 19, 20) on the lower narrow side (16) and the lateral narrow sides (14, 15) of the partition wall (9) to seal gaps between the partition wall (9) and the commercial vehicle structure (1), wherein the sealing strips (18, 19, 20) are adjustable from a retracted to an extended position,
**characterised in that**
an operating unit (21) connected in this manner to the sealing strips (18, 19, 20) is provided such that the sealing strips (18, 19, 20) are adjustable from the retracted position into the extended position and back by actuating the operating unit (21).

2. Partition wall according to Claim 1,
**characterised in that**
the sealing strips (18, 19, 20) on the lower narrow side (16) and on the lateral narrow sides (14, 15) are adjustable from the retracted position into the extended position and back preferably via a knee lever mechanism with at least one knee lever (34).

3. Partition wall according to Claim 2,
**characterised in that**
one end of the at least one knee lever (34) is held fixed on the partition wall (9).

4. Partition wall according to Claim 2 or 3,
**characterised in that**
the at least one knee lever (34) of at least one sealing strip (18, 19, 20) is connected to the operating unit (21) via at least one actuating lever (29, 33) extending substantially parallel to the sealing strip (18, 19, 20).

5. Partition wall according to any one of Claims 2 to 4,
**characterised in that**
the at least one knee lever (34) of at least one sealing strip (18, 19, 20) is connected to the operating unit (21) via a coupling rod (23) and **in that** the coupling rod (23) comprises a pivot lever (28) held pivotably on the partition wall for force transfer from the operating unit (21), preferably via at least one actuating lever (29), to the knee lever (34).

6. Partition wall according to Claim 4 or 5,
**characterised in that**
the at least one actuating lever (33) of the lower sealing strip (20) is connected to at least one actuating lever (29) of a lateral sealing strip (18, 19) preferably via a pivot lever (32) held pivotably on the partition wall (9).

7. Partition wall according to any one Claims 1 to 6,
**characterised in that**
the lower sealing strip (20) has at least one locking element (37) to lock the partition wall (9) on the bottom (7) of the commercial vehicle structure (1) and at least one sealing strip (36) to seal a gap between the partition wall (9) and the bottom (7) of the commercial vehicle structure (1), **in that** the locking element (37) in the extended position of the lower sealing strip (20) forms a part of the underside of the sealing strip (20) and **in that** the locking element (37) has a reduced elasticity with respect to the sealing element (36).

8. Partition wall according to Claim 7,
**characterised in that**
the at least one sealing element (36) protrudes downwards in the retracted position of the lower sealing strip (20) with respect to the at least one locking element (37).

9. Partition wall according to Claim 7 or 8,
**characterised in that**
the at least one locking element (37) has a profiled underside (38), preferably comprising grooves running parallel to the partition wall plane, for the positive engagement of the profiled underside (38) into a corresponding profile (39) of the bottom (7) of the commercial vehicle structure (1).

10. Partition wall according to any one of Claims 7 to 9,
**characterised in that**
the at least one locking element (37) is held on a knee lever (34) or is fixed on a profile element (35) held by at least one knee lever (34).

11. Partition wall according to any one of Claims 1 to 10,
**characterised in that**
the central operating unit (21) is arranged at an upper edge of the partition wall (9).

12. Partition wall according to any one of Claims 1 to 11,
**characterised in that**
the central operating unit (21) is formed as a hand lever, preferably pivotable substantially parallel to the partition wall (9).

13. Commercial vehicle structure (1), in particular a heavy goods vehicle, trailer and/or semitrailer, comprising a front wall (2), a back wall (3), two side walls (4, 5), a roof (6) and a bottom (7), wherein the commercial vehicle structure (1) includes a load compartment (8), wherein a partition wall (9) formed to divide the load compartment (8) is provided, wherein the partition wall (9) respectively has a sealing strip (18, 19, 20) on the lower narrow side (16) and the lateral narrow sides (14, 15) of the partition wall (9) to seal gaps between the partition wall (9), on the one hand, and the side walls (4, 5) and the bottom (7) of the commercial vehicle structure (1), on the other hand, wherein the sealing strips (18, 19, 20) are adjustable parallel to the partition wall plane from a retracted position into an extended position,
**characterised in that**
an operating unit (21) connected in this manner to the sealing strips (18, 19, 20) is provided such that the sealing strips (18, 19, 20) are adjustable from the retracted position into the extended position and back by actuating the operating unit (21) and **in that** the sealing strips (18, 19, 20) abut in the extended position on the side walls (4, 5) and the bottom (7).

14. Commercial vehicle structure according to Claim 13,
**characterised in that**
the partition wall (9) is formed according to any one of Claims 2 to 12.

15. Commercial vehicle structure according to Claim 14,
**characterised in that**
the at least one locking element (37) has a profiled underside (38) preferably comprising grooves running parallel to the partition wall plane and **in that** the profile of the underside of the locking element (37) engages in the extended position of the lower sealing strip in a positive-locking manner into a corresponding profile (39) of the bottom (7) of the commercial vehicle structure (1).

## Revendications

1. Paroi de séparation (9) pour subdiviser un espace de chargement (8) d'une carrosserie de véhicule utilitaire (1), de préférence un camion, une remorque et/ou une semi-remorque, comprenant respectivement une baguette d'étanchéité (18, 19, 20) au niveau du côté étroit inférieur (16) et des côtés étroits latéraux (14, 15) de la paroi de séparation (9) servant à réaliser l'étanchéité de fentes entre la paroi de séparation (9) et la carrosserie de véhicule utilitaire (1), les baguettes d'étanchéité (18, 19, 20) pouvant être déplacées d'une position rentrée en une position sortie,
**caractérisée en ce qu'**il existe une unité de manoeuvre (21) reliée aux baguettes d'étanchéité (18, 19, 20) de telle sorte que les baguettes d'étanchéité (18, 19, 20) peuvent être déplacées de la position rentrée à la position sortie et inversement en actionnant l'unité de manoeuvre (21).

2. Paroi de séparation selon la revendication 1, **caractérisée en ce que** les baguettes d'étanchéité (18, 19, 20) au niveau du côté étroit inférieur (16) et des côtés étroits latéraux (14, 15) peuvent être déplacées de la position rétractée à la position sortie et inversement de préférence respectivement par le biais d'un mécanisme à levier à genouillère comprenant au moins un levier à genouillère (34).

3. Paroi de séparation selon la revendication 2, **caractérisée en ce que** l'extrémité de l'au moins un levier à genouillère (34) est maintenue en position fixe au niveau de la paroi de séparation (9).

4. Paroi de séparation selon la revendication 2 ou 3, **caractérisée en ce que** l'au moins un levier à genouillère (34) d'au moins une baguette d'étanchéité (18, 19, 20) est relié à l'unité de manoeuvre (21) par le biais d'au moins un levier de commande (29, 33) qui s'étend sensiblement parallèlement à la baguette d'étanchéité (18, 19, 20).

5. Paroi de séparation selon l'une des revendications 2 à 4, **caractérisée en ce que** l'au moins un levier à genouillère (34) d'au moins une baguette d'étanchéité (18, 19, 20) est relié à l'unité de manoeuvre (21) par le biais d'une barre de couplage (23) et **en ce que** la barre de couplage (23) comporte un levier pivotant (28) maintenu pivotant au niveau de la paroi de séparation et servant à la transmission de force de l'unité de manoeuvre (21) au levier à genouillère (34), de préférence par le biais d'au moins un levier de commande (29).

6. Paroi de séparation selon la revendication 4 ou 5, **caractérisée en ce que** l'au moins un levier de commande (33) de la baguette d'étanchéité inférieure (20) est relié à au moins un levier de commande (29) d'une baguette d'étanchéité latérale (18, 19), de préférence par le biais d'un levier pivotant (32) maintenu pivotant au niveau de la paroi de séparation (9).

7. Paroi de séparation selon l'une des revendications 1 à 6, **caractérisée en ce que** la baguette d'étanchéité inférieure (20) possède au moins un élément de blocage (37) servant à bloquer la paroi de séparation (9) au niveau du plancher (7) de la carrosserie de véhicule utilitaire (1) et au moins un élément d'étanchéité (36) servant à réaliser l'étanchéité d'une fente entre la paroi de séparation (9) et le plancher (7) de la carrosserie de véhicule utilitaire (1), **en ce que** l'élément de blocage (37), dans la position sortie de la baguette d'étanchéité inférieure (20), forme une partie du côté inférieur de la baguette d'étanchéité (20) et **en ce que** l'élément de blocage (37) possède une élasticité réduite par rapport à l'élément d'étanchéité (36).

8. Paroi de séparation selon la revendication 7, **caractérisée en ce que** dans la position rentrée de la baguette d'étanchéité inférieure (20), l'au moins un élément d'étanchéité (36) fait saillie vers le bas par rapport à l'au moins un élément de blocage (37).

9. Paroi de séparation selon la revendication 7 ou 8, **caractérisée en ce que** l'au moins un élément de blocage (37) possède un côté inférieur (38) profilé, qui possède de préférence des rainures s'étendant parallèlement au plan de la paroi de séparation, destinées à la mise en prise avec complémentarité de formes du côté inférieur (38) profilé dans un profilage (39) correspondant du plancher (7) de la carrosserie de véhicule utilitaire (1).

10. Paroi de séparation selon l'une des revendications 7 à 9, **caractérisée en ce que** l'au moins un élément de blocage (37) est maintenu au niveau d'un levier à genouillère (34) ou fixé au niveau d'un élément profilé (35) maintenu par au moins un levier à genouillère (34).

11. Paroi de séparation selon l'une des revendications 1 à 10, **caractérisée en ce que** l'unité de manoeuvre (21) centrale est disposée au niveau du bord supérieur de la paroi de séparation (9).

12. Paroi de séparation selon l'une des revendications 1 à 11, **caractérisée en ce que** l'unité de manoeuvre (21) centrale est réalisée sous la forme d'un levier à main qui peut pivoter de préférence sensiblement parallèlement à la paroi de séparation (9).

13. Carrosserie de véhicule utilitaire (1), notamment d'un camion, d'une remorque et/ou d'une semi-remorque, comprenant une paroi frontale (2), une paroi arrière (3), deux parois latérales (4, 5), un toit (6) et un plancher (7), la carrosserie de véhicule utilitaire (1) entourant un espace de chargement (8), une paroi de séparation (9) configurée pour subdiviser l'espace de chargement (8) étant présente, la paroi de séparation (9) comprenant respectivement une baguette d'étanchéité (18, 19, 20) au niveau du côté étroit inférieur (16) et des côtés étroits latéraux (14, 15) de la paroi de séparation (9) servant à réaliser l'étanchéité de fentes entre la paroi de séparation (9) et d'une part les parois latérales (4, 5) ainsi que, d'autre part, le plancher (7) de la carrosserie de véhicule utilitaire (1), les baguettes d'étanchéité (18, 19, 20) pouvant être déplacées d'une position rentrée en une position sortie parallèlement au plan de la paroi séparation,
**caractérisée en ce qu'**il existe une unité de manoeuvre (21) reliée aux baguettes d'étanchéité (18, 19, 20) de telle sorte que les baguettes d'étanchéité (18, 19, 20) peuvent être déplacées de la position rentrée à la position sortie et inversement en actionnant l'unité de manoeuvre (21), et **en ce que** dans la position sortie, les baguettes d'étanchéité (18, 19, 20) reposent contre les parois latérales (4, 5) et le plancher (7).

14. Carrosserie de véhicule utilitaire selon la revendication 13, **caractérisée en ce que** la paroi de séparation (9) est configurée selon l'une des revendications 2 à 12.

15. Carrosserie de véhicule utilitaire selon la revendication 14, **caractérisée en ce que** l'au moins un élément de blocage (37) possède un côté inférieur (38) profilé, qui possède des rainures s'étendant de préférence parallèlement au plan de la paroi de séparation, et **en ce que** dans la position sortie de la baguette d'étanchéité inférieure, le profilé du côté inférieur de l'élément de blocage (37) vient en prise avec complémentarité de formes dans un profilage (39) correspondant du plancher (7) de la carrosserie de véhicule utilitaire (1).
